# EUROPÄISCHE PATENTSCHRIFT

(11) **EP 1 914 167 B1**
(45) Veröffentlichungstag und Bekanntmachung des Hinweises auf die Patenterteilung: **29.04.2009**
(21) Anmeldenummer: 07019678.7
(22) Anmeldetag: 09.10.2007
(51) Int. Cl.: B65B 21/12, B65G 47/90

(54) **Hubvorrichtung zum Herausheben von Bügelflaschen aus Flaschenkästen und Verfahren zum Herausheben von Bügelflaschen aus Flaschenkästen**
Lifting device for removing flip-top bottles from crates and method for removing flip-top bottles from crates
Dispositif de levage destiné à détacher des bouteilles à bouchons mécaniques de caisses de bouteilles et procédé destiné à détacher des bouteilles à bouchons mécaniques de caisses de bouteilles

(30) Priorität: 17.10.2006 DE 102006049496
(43) Veröffentlichungstag der Anmeldung: 23.04.2008
(73) Patentinhaber: KRONES AG, 93073 Neutraubling (DE)
(72) Erfinder: Ettenhuber, Klaus, 83135 Schechen (DE)

(56) Entgegenhaltungen:
- DE-A1- 19 833 807

## Beschreibung

Die Erfindung betrifft eine Hubvorrichtung zum Herausheben von Bügelflaschen aus Flaschenkästen sowie ein Verfahren zum Herausheben von Bügelflaschen aus Flaschenkästen.

Aus der DE 299 11 943 U1 ist ein Flaschengreifer zum Herausheben und Einführen von Flaschen bzw. Bügelverschlussflaschen aus Kisten bekannt, der dazu bestimmt ist, ein Verhaken des offenen Bügelverschlusses an den Außenwänden des Behältnisses bzw. der Kiste, insbesondere deren Sichtöffnungen zu vermeiden. Zu diesem Zweck ist gemäß der DE 299 11 943 U1 vorgesehen, dass der Flaschengreifer eine die Flasche um ihre Längsachse drehende Drehvorrichtung aufweist, welche in Abhängigkeit der beim Herausheben der Flasche aus dem Behältnis bzw. der Kiste benötigten Zugkraft aktivierbar ist. Hierzu schlägt die DE 299 11 943 U1 vor, dass die Drehvorrichtung aus einer Führungshülse mit spindelartiger Führungseinrichtung besteht, in welcher der Greiferschaft längsverschiebbar und drehbar geführt ist, so dass eine Längsverschiebung des Greiferschafts in der Führungshülse mit einer Drehbewegung des Greiferfschafts gekoppelt ist, wobei der Greiferschaft mittels einer Feder abgestützt ist.

Aus der EP 1 321 366 B1 ist eine Vorrichtung zur Drehausrichtung von Flaschen mit geöffnetem Bügelverschluss in einem Kasten bekannt, bei der im unteren Bereich von Drehköpfen diametral gegenüberliegende Anschlagelemente vorgesehen sind, mittels welchen die im Kasten befindlichen Flaschen ausgerichtet werden können. Dieses Ausrichten erfolgt vor dem Greifen der Flaschen, so dass die dann gegriffenen Flaschen in reiner Linearbewegung aus dem Kasten gehoben werden können, ohne dass die Bügelverschlüsse dabei in Aussparungen des Kastens blockierend in Eingriff kommen bzw. gehalten werden.

Aus der DE 198 33 807 A1 ist eine Einrichtung zum Herausheben von Bügelflaschen aus Flaschenkästen bekannt, bei der diejenigen Bügelflaschen, die beim Herausheben mit den Kastenwänden kollidieren können, detektiert und um 90° gedreht werden.

Der Erfindung liegt die Aufgabe zugrunde, eine kostengünstige, betriebssichere und einfache Möglichkeit zu Herausheben von Bügelflaschen aus Flaschenkästen zu schaffen.

Erfindungsgemäß wird eine Hubvorrichtung gemäß Anspruch 1 vorgeschlagen. Ein erfindungsgemäßes Verfahren ist Gegenstand des Anspruchs 10. Bevorzugte Weiterbildungen sind Gegenstand der Unteransprüche.

Erfindungsgemäß wird insbesondere eine Hubvorrichtung zum Herausheben von Bügelflaschen, die auch als Bügelverschlussflaschen bezeichnet werden können, aus Flaschenkästen vorgeschlagen. Die Hubvorrichtung weist eine oder mehrere Greifeinrichtungen für das jeweilige Greifen eines jeweiligen Flaschenhalses einer jeweiligen Flasche auf. Ferner weist die Hubvorrichtung eine Steuerungseinrichtung zum Ansteuern der wenigstens einen Greifeinrichtung auf. Diese Steuerungseinrichtung kann beispielsweise elektronisch und/oder pneumatisch und/oder hydraulisch und/oder mechanisch ausgebildet sein. Mittels der Steuerungseinrichtung kann die entlang einer vorbestimmten Achse gesehene Axialstellung der wenigstens einen Greifeinrichtung bzw. wenigstens eines Bauteils dieser Greifeinrichtung, wie z.B. Greifer bzw. Greifkopf bzw. Greifertulpe, für das Herausheben von Bügelflaschen verändert werden.

Weiter kann mittels der Steuerungseinrichtung die in Umfangsrichtung dieser Achse gesehene Schwenkstellung der Greifeinrichtung verändert werden. Die Hubvorrichtung weist weiter eine Detektionseinrichtung zum Detektieren von wenigstens einer Blockadestellung einer Greifeinrichtung bzw. einer in einer Greifeinrichtung aufgenommenen Bügelflasche auf. Diese Detektionseinrichtung kann beispielsweise einen Sensor bzw. einen Näherungsschalter aufweisen, oder von einem solchen gebildet werden. Die Steuerungseinrichtung weist einen Umschaltmechanismus auf. Diese den Umschaltmechanismus aufweisende Steuerungseinrichtung und die Detektionseinrichtung wirken derart zusammen, dass bei einer Blockade einer Greifeinrichtung bzw. einer in der Greifeinrichtung aufgenommenen Bügelflasche während einer Bewegung zum Herausheben der Bügelflasche aus einem Flaschenkasten die Greifeinrichtung oder ein Bauteil der Greifereinrichtung abgesenkt und verschwenkt wird, um ein Lösen der blockierten Greifeinrichtung bzw. einer in der Greifeinrichtung aufgenommenen Bügelflasche zu bewirken, die beispielsweise mit dem offenen Verschlusskörper oder Bügel am Rand einer seitlichen Kastenöffnung festhängt.

Vorzugsweise ist das Zusammenwirken weiter so, dass anschließend die betreffende Greifeinrichtung bzw. Flasche wieder in die der Absenkrichtung entgegengesetzten Richtung bewegt wird, und zwar insbesondere, um eine von der Greifeinrichtung aufgenommene Flasche aus einem Flaschenkasten zu bewegen, nachdem die vorübergehend gegebene Blockade beseitigt ist.

Das Schwenken kann beispielsweise ein Schwenken um einen Winkel sein, der zwischen 45° und 180°, vorzugsweise zwischen 70° und 180°, bevorzugt im Wesentlichen 90° beträgt.

In vorteilhafter Weiterbildung ist vorgesehen, dass die Greifeinrichtung einen Greifer, z.B. eine Greifertulpe aufweist.

In vorteilhafter Gestaltung ist für das Absenken und/oder Schwenken der Greifeinrichtung oder eines Bauteiles der Greifeinrichtung, wie Greifer, Greifkopf oder Greiftulpe, bei einer Blockade dieser Greifeinrichtung bzw. einer in der Greifeinrichtung aufgenommenen Bügelflasche während einer Bewegung zum Herausheben der Bügelflasche aus einem Flaschenkasten eine Kolben-Zylinder-Baugruppe mit einem Zylinder und einem darin angeordneten bzw. geführten Kolben vorgesehen.

Es kann vorgesehen sein, dass der Kolben einer Kolben-Zylinder-Baugruppe mit einem Greifer und/oder Greifkopf und/oder einer Greiftulpe der Greifeinrichtung gekoppelt ist, und zwar insbesondere axialfest und/oder drehfest gekoppelt ist. In vorteilhafter Gestaltung ragt hierzu eine Kolbenstange in der dem Greifer und/oder dem Greifkopf und/oder der Greiftulpe der Greifeinrichtung zugewandten Richtung aus dem Zylinder heraus. In den Zylinder münden dabei Versorgungsleitungen, wie Versorgungsleitungen zur hydraulischen oder pneumatischen Beaufschlagung. Dies ist insbesondere derart gestaltet, dass der Kolben hydraulisch oder pneumatisch im Zylinder verschoben werden kann.

Gemäß einer besonders vorteilhaften Gestaltung ist vorgesehen, dass eine Zwangsführungseinrichtung bzw. Kulisse für den Kolben und/oder für einen Greifer und/oder für einen Greifkopf und/oder für eine Greiftulpe der Greifeinrichtung vorgesehen ist. Diese kann beispielsweise so gestaltet sein, dass bei einer in Richtung des Greifers bzw. Greifkopfes bzw. der Greiftulpe der Greifeinrichtung gerichteten Bewegung des Kolbens (bzw. bei einem Ausfahren des Kolbens) - insbesondere mittels eines in der Kulisse geführten Führungsstiftes - der Kolben und/oder der Greifer bzw. der Greifkopf bzw. die Greiftulpe der Greifeinrichtung schraubenförmig bewegt wird. Dabei handelt es sich insbesondere um eine Richtung bzw. Orientierung, die der Richtung einer Zugbelastung (ausgelöst durch ein Verhaken einer Flasche) entspricht. Dieses kann beispielsweise so sein, dass in Schwenkrichtung bis zu einem unteren Umkehrpunkt ein vorbestimmter Winkel überfahren wird, wie beispielsweise ein Winkel der einem der oben angegebenen Werte entspricht bzw. in einem der dort genannten Intervalle liegt. In besonders vorteilhafter Weiterbildung ist die Zwangsführungseinrichtung bzw. Kulisse ferner so ausgebildet, dass bei einem sich an das - insbesondere maximale - Ausfahren des Kolbens anschließenden Einfahren des Kolbens der Kolben und/oder der Greifer bzw. der Greifkopf bzw. die Greiftulpe der Greifeinrichtung im Wesentlichen linear, d.h. axial bewegt.

Es ist bei der letztgenannten Gestaltung also insbesondere vorgesehen, dass durch eine Ab- und Aufbewegung des Kolbens und/oder des Greifer bzw. des Greifkopfes bzw. der Greiftulpe der Greifeinrichtung zwar im Wesentlichen die gleiche Axialstellung wieder angefahren werden kann, die Schwenkstellung dabei jedoch verändert wird. Dieses, also das Verändern der Schwenkstellung des Kolbens und/oder des Greifer bzw. des Greifkopfes bzw. der Greiftulpe der Greifeinrichtung, lässt sich auch mittels - im Vergleich zu vorgenanntem Beispiel - im Detail anders gestalteten Vorrichtungen erreichen, wie beispielsweise durch entsprechende Ansteuerung einer translatorisch und rotatorisch beweglichen Welle mittels Elektromotoren.

Gemäß einer vorteilhaften Weiterbildung ist vorgesehen, dass die Steuerungseinrichtung wenigstens ein erstes Steuerungsmodul zum Erzeugen von translatorischen, insbesondere rein translatorischen oder rein linearen Bewegungen einer oder mehrerer Greifereinrichtungen zum Herausheben und ggf. Einsetzen von Bügelflaschen aus bzw. in Flaschenkästen aufweist, sowie wenigstens ein zweites Steuerungsmodul zum Erzeugen von kombinierten translatorischen und rotatorischen Bewegungen einer oder mehrerer Greifereinrichtungen oder wenigstens eines Bauteils einer oder mehrerer Greifereinrichtungen für das Lösen einer Blockadestellung wenigstens einer Greifeinrichtung bzw. einer in der jeweils betreffenden Greifeinrichtung aufgenommenen Bügelflasche. Das zweite Steuerungsmodul kann beispielsweise derart sein, wie es vorstehend erläutert wurde, bzw. die genannten Bewegungen ansteuern. Das erste Steuerungsmodul kann beispielsweise für eine Vielzahl von Greifeinrichtungen gemeinsam vorgesehen sein.

In vorteilhafter Ausgestaltung ist vorgesehen, dass bei einem Blockieren bzw. Verhaken einer Bügelflasche im Kasten die Kolben-Zylinder-Baugruppe geringfügig gelängt wird bzw. der Zylinder gegenüber dem Kolben geringfügig entsprechend einer Zugbelastung der Kolben-Zylinder-Baugruppe wandert. Dies kann beispielsweise eine Relativbewegung bzw. eine Längung sein, die im Bereich von 1 mm bis 10 mm, vorzugsweise, im Bereich von 2 mm bis 7 mm, liegt aber besonders bevorzugt im Wesentlichen 3 mm beträgt. Diese Längung bzw. dieses Wandern bzw. diese Relativbewegung wird vorzugsweise durch rein mechanische Belastung der Kolben-Zylinder-Baugruppe aufgrund einer Belastung zum Herausheben der Flasche einerseits und dem Blockieren durch Verhaken eines Verschlusses, andererseits, bewirkt.

Es kann vorgesehen sein, dass diese Relativbewegung einem Stellweg entspricht, wodurch eine Belastung, insbesondere pneumatische Belastung, des Kolbens initiiert wird, so dass dieser in Richtung einer ausgefahrenen Stellung belastet und in eine solche bewegt wird. Der hierbei überfahrene Weg ist dabei vorzugsweise wenigstens zweimal, vorzugsweise wenigstens dreimal, vorzugsweise wenigstens viermal, vorzugsweise wenigstens fünfmal, vorzugsweise wenigstens sechsmal so groß wie der angesprochene Stellweg. Zur Detektion eines Stellwegs oder einer geringfügigen Relativbewegung kann ein Sensor, beispielsweise ein Näherungsschalter vorgesehen sein.

In vorteilhafter Ausgestaltung ist vorgesehen, dass die Hubvorrichtung eine Vielzahl von Greifeinrichtungen aufweist und das erste Steuerungsmodul mit dieser Vielzahl von Greifeinrichtungen zusammenwirkt, und zwar insbesondere so, dass es diese Vielzahl von Greifeinrichtungen stets simultan ansteuert. Dies kann so sein, dass jeder Flasche bzw. jeder Flaschenposition einer Flaschenkiste, aber zumindest den auf den Kistenwänden stehenden Flaschen oder jeder Flasche bzw. jeder Flaschenposition einer Anordnung nebeneinander stehender Flaschenkisten jeweils eine separate Greifeinrichtung zugeordnet ist und sämtliche dieser Greifeinrichtungen durch das erste Steuerungsmodul so bzw. nur so angesteuert werden können, dass simultane Stellbewegungen bzw. Stellkräfte dieser Greifeinrichtungen bewirkt werden, und zwar insbesondere simultane Stellbewegungen bzw. Stellkräfte, die translatorisch, vorzugsweise linear, gerichtet sind.

Insbesondere dabei kann in einer besonders zweckmäßigen Weiterbildung vorgesehen sein, dass ein oder mehrere zweite Steuerungsmodule derart mit jeweils einer bzw. mehreren Detektionseinrichtungen zusammenwirken, dass eine jeweilige Greifeinrichtung oder ein Bauteil dieser Greifeinrichtung für ein Lösen einer Blockadestellung angesteuert wird, wenn eine dieser betreffenden Greifeinrichtung zugeordnete Detektionseinrichtung eine Blockade detektiert oder ein auf eine Blockade hinweisendes Signal hervorbringt. Dabei kann insbesondere vorgesehen sein, dass für die oder vorbestimmte Greifeinrichtungen jeweils separat festgestellt wird, ob eine Blockade gegeben ist oder nicht; es kann beispielsweise vorgesehen sein, dass nur für solche Greifeinrichtungen detektiert wird, ob eine Blockade gegeben ist oder nicht, die Flaschenpositionen eines Flaschenkastens zugeordnet sind, bezüglich welcher eine Gefahr einer Blockade besteht, bzw. die Gefahr besteht, dass sich ein Bügel einer solchen BügelFlasche verhakt (blockiert); dieses kann insbesondere so sein, solche Flaschenpositionen solche sind, die an einem Durchbruch des Flaschenkastens gelegen sind, wie einem Durchbruch zur Bildung eines Tragegriffs.

Vorzugsweise ist das Drehmoment zum Freidrehen (der Bügelflasche) unabhängig von der Aufwärtsbewegung des Greiferkopfes.

Bevorzugt wird die Bewegung in der Kulisse vom Pneumatikzylinder ausgeführt.

In zu bevorzugender Gestaltung wird der verhakte bzw. blockierende Bügelverschluss durch den Zylinder bzw. Pneumatikzylinder vom Kollisionspunkt weggedrückt, und zwar insbesondere nach unten.

Es ist insbesondere vorgesehen, dass die erfindungsgemäße Gestaltung so ausgebildet ist, dass sie einen Sensor, ein Ventil und einen Hub-Dreh-Zylinder aufweist.

Anzumerken ist, dass das erfindungsgemäße Verfahren auch durch Schritte oder Funktionalitäten weitergebildet sein kann, die in dieser Offenbarung im Zusammenhang mit der erfindungsgemäßen Vorrichtung und dessen Weiterbildungen erwähnt werden. Besonders zweckmäßig ist ferner, dass ein erfindungsgemäßes Verfahren zur Steuerung einer erfindungsgemäßen Vorrichtung eingesetzt wird, oder dass ein erfindungsgemäßes Verfahren mittels einer erfindungsgemäßen Vorrichtung durchgeführt wird.

Anhand der Figuren sollen im Folgenden Ausführungsbeispiele der Erfindung näher erläutert werden. Dabei zeigt:
- Fig. 1: eine erste beispielhafte Ausführungsform einer erfindungsgemäßen Hubvorrichtung in schematischer, teilweiser Ansicht,
- Fig. 2: die Gestaltung gemäß Fig. 1 in 3-D-Ansicht, wobei ein Teil der in Fig. 1 gezeigten Darstellung weggelassen ist, und
- Fig. 3: eine zweite beispielhafte Ausführungsform einer erfindungsgemäßen Hubvorrichtung in schematischer, teilweiser Ansicht.

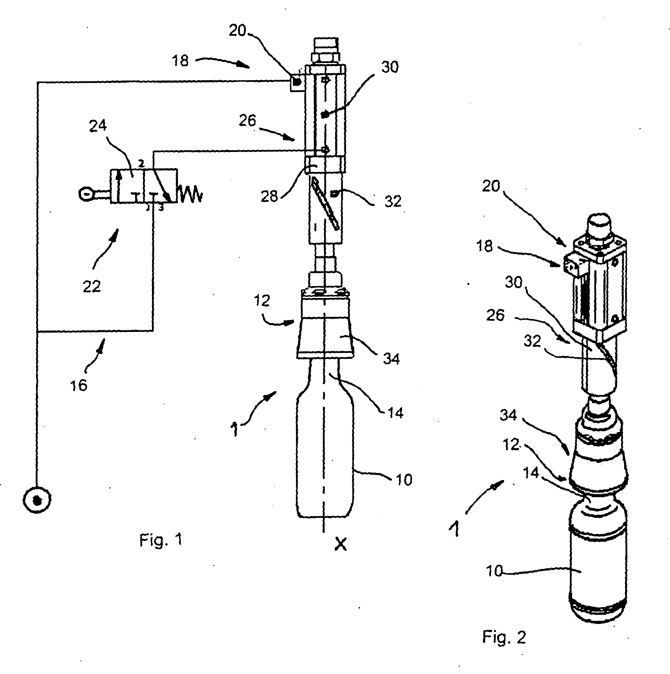

Die Fig. 1 und 2 zeigen ein erstes Ausführungsbeispiel einer erfindungsgemäßen Hubvorrichtung 1 zum Herausheben von Bügelflaschen 10 aus Flaschenkästen. Die Hubvorrichtung 1 weist mehrere Greifeinrichtungen 12 für das jeweilige Greifen eines jeweiligen Flaschenhalses 14 einer jeweiligen Flasche 10 auf, die einen Greifkopf für den Besatz eines ganzen Flaschenkastens bilden können. Von diesen Greifeinrichtungen 12 ist zur besseren Übersichtlichkeit nur eine in den Fig. 1 und 2 gezeigt. In nicht näher dargestellter Weise sind die Greifeinrichtungen mit Hilfe gesteuerter Umsetzeinrichtungen, wie beispielsweise in DE 33 16 479 A1 oder DE 40 24 335 A1 offenbart, von einer Kastenauspackstation zu einer Flaschenabsetzstation und zurück überführbar.

Die Hubvorrichtung 1 weist ferner eine Steuerungseinrichtung 16 zum Ansteuern der wenigstens einen Greifeinrichtung 12 auf. Mittels der Steuerungseinrichtung 16 kann die entlang einer vorbestimmten Achse X gesehene Axialstellung der wenigstens einen Greifeinrichtung 12 verändert werden. Ferner kann mittels der Steuerungseinrichtung 16 auch die in der in Umfangsrichtung dieser Achse gesehene Schwenkstellung dieser Greifeinrichtung 12 verändert werden.

Ferner ist eine Detektionseinrichtung 18 zum Detektieren von wenigstens einer Blockadestellung der Greifeinrichtung 12 bzw. einer in einer Greifeinrichtung 12 aufgenommenen Bügelflasche 10 vorgesehen. Diese Detektionseinrichtung 18 ist hier als Näherungsschalter 20 bzw. magnetischer Näherungsschalter 20 ausgebildet. Es kann vorgesehen sein, dass dieser Näherungsschalter 20 eine einem 3/2-Wegeventil entsprechende Funktion hat, oder ein solches ansteuert.

Die Steuerungseinrichtung 16 weist ferner einen Umschaltmechanismus 22 auf, zu dem hier der bereits angesprochene Näherungsschalter 20, ein 3/2-Wegeventil 24 sowie eine Kolben-Zylinder-Baugruppe 26 mit einem Zylinder 30 und einem darin angeordneten bzw. geführten Kolben 28 gehört.

Die Detektionseinrichtung 18 und die diesen Umschaltmechanismus 22 aufweisende Steuerungseinrichtung 16 (d. h. insbesondere der verbleibende Teil dieser Steuerungseinrichtung 16) wirken derart zusammen, dass bei einer Blockade einer Greifeinrichtung 12 bzw. einer in der Greifeinrichtung 12 aufgenommenen Bügelflasche 10 während einer Bewegung zum Herausheben der Bügelflasche 10 aus einem Flaschenkasten die Greifeinrichtung 12 oder ein Bauteil der Greifeinrichtung 12 in Gegenrichtung (bezüglich der Achse X) abgesenkt und verschwenkt wird, um ein Lösen der blockierten Greifeinrichtung 12 bzw. einer in der Greifeinrichtung 12 aufgenommenen Bügelflasche 10 zu bewirken.

Es ist insbesondere vorgesehen, dass der Greifer bzw. die Greifeinrichtung 12 die Bügelflasche 10 zunächst greift und dann die Flasche 10 nach oben zieht. Bei einer Blockade der Bügelflasche, insbesondere Verklemmung des Bügelverschlusses dieser Bügelflasche 10 im Flaschenkasten bzw. einem Durchbruch desselben, z.B. in den Grifflöchern wird der Kolben 28 des Pneumatikzylinders 30 an einer weiteren Aufwärtsbewegung gehindert, während der Pneumatikzylinder 30 von der Umsetzeinrichtung noch weiter angehoben wird. Durch einen am Pneumatikzylinder 30 angebauten Näherungsschalter wird die Relativbewegung zwischen Kolben und Zylinder erkannt, und der Zylinder 30 wird mit Luft beaufschlagt. Durch das Ausfahren des Zylinderkolbens 28 bzw. dessen Kolbenstange nach unten wird ein Bolzen mit Führungsstift in einer Kulisse verschoben und um einen vorbestimmten Winkel, wie insbesondere 90°, gedreht bzw. geschwenkt. Es ist also insbesondere eine Zwangsführungseinrichtung 32 vorgesehen, die eine Kulisse und einen in diese eingreifenden Bolzen oder Führungsstift aufweist.

Durch die Drehung des Bolzens wird auch die Greifertulpe 34 mit der Bügelverschlussflasche 10 während dem gleichzeitigen Absenken nach unten um die Achse X gedreht. Die dadurch freigedrehte Flasche 10 kann im weiteren Verlauf von der Umsetzeinrichtung nach oben aus dem Flaschenkasten gehoben werden. Nach dem der Greiferkopf komplett nach oben gefahren ist, werden in einer definierten Position alle betätigten Greifer bzw. Greifeinrichtungen 12 über das 3/2-Wegeventil in die Ausgangsstellung zurückgefahren, so dass bei der Abgabe alle Flaschen 10 wieder das gleiche Höhenniveau haben, das zum Absetzen der Flaschen auf beispielsweise einen Förderer erforderlich ist. Die Greifertulpen 34 können ggf. entsprechend DE 299 14 444 U1 ausgeführt sein.

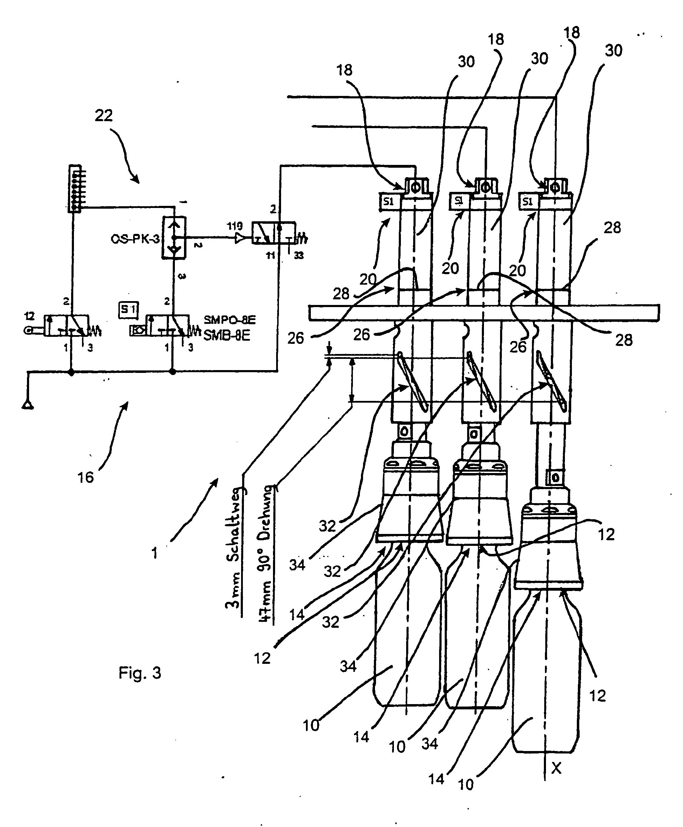

Fig. 3 zeigt ein weiteres Ausführungsbeispiel, wobei dort drei Greifeinrichtungen 12 in jeweils verschiedenen Stellungen gezeigt sind und die Bezugszeichen entsprechend der Fig. 1 und 2 gewählt wurden. Die in Fig. 3 linke Greifeinrichtung 12 ist in einer Stellung gezeigt, die einer Zugriffsposition zum Greifen bzw. Erfassen der Flasche 10 entspricht.

Die in Fig. 3 mittlere Greifeinrichtung 12 ist dagegen in einer Stellung gezeigt, in der die Flasche 10 im Kasten blockiert bzw. deren Bügel verhakt ist und unter der Last zum Herausheben der Flasche 10 die Kolben-Zylinder-Baugruppe 26 in axialer Richtung gestreckt wird, wodurch eine Längung der Aufhängung eintritt, d.h. der Zylinder 30 gegenüber dem Kolben 28 entsprechend einer Zugbelastung wandert, insbesondere geringfügig wandert. Im dargestellten Ausführungsbeispiel beträgt dieser zunächst ausschließlich axiale Schaltweg 3mm, der vom Näherungsschalter 20 detektiert wird und im Nachfolgenden die kombinierte, nach unten gerichtete Ausfahr- und Drehbewegung der Greifertulpe 34 auslöst, bis die ganz rechts dargestellte Stellung erreicht ist. Hierzu wird der Zylinder 30 über Steuerventile mit Druckluft beaufschlagt.

Die in Fig. 3 rechte Greifeinrichtung 12 ist in einer Stellung gezeigt, die einer Ausrichtposition nach dem Drehen der zuvor verhakten bzw. blockierten Flasche entspricht, wobei ausgehend vom Ende des Schaltwegs ein Absenkhub von 47mm mit einer gleichzeitigen 90°-Drehung der Greiftulpe ausgeführt wurde.

Anzumerken ist, dass die anhand der Fig.3 erläuterten Merkmale bzw. Positionen auch bei der Gestaltung gemäß den Fig. 1 und 2 gegeben sein können, und umgekehrt.

Wie die Ausführungsbeispiele zeigen, wird dadurch jeweils eine gute Gestaltung vorgeschlagen, durch die das Problem beim Auspacken von Bügelverschlussflaschen, das darin besteht, dass sich die geöffneten Bügelverschlüsse an den Fenstern der Flaschenkästen verhaken können, auf einfache, kostengünstige Weise gelöst.

## Patentansprüche

1. Hubvorrichtung zum Herausheben von Bügelflaschen (10) aus Flaschenkästen, welche Hubvorrichtung (1) eine oder mehrere Greifeinrichtungen (12) für das Greifen einer Bügelflasche (10) aufweist, wobei die Hubvorrichtung (1) ferner eine Steuerungseinrichtung (16) zum Ansteuern der wenigstens einen Greifeinrichtung (12) aufweist, mittels welcher Steuerungseinrichtung (16) die entlang einer vorbestimmten Achse gesehene Axialstellung der wenigstens einen Greifeinrichtung (12) oder eines Bauteils dieser Greifeinrichtung (12) veränderbar ist und mittels welcher Steuerungseinrichtung (16) die in der in Umfangsrichtung dieser Achse gesehene Schwenkstellung dieser Greifeinrichtung (12) oder eines Bauteils dieser Greifeinrichtung (12) veränderbar ist und eine Detektionseinrichtung (18) zum Detektieren von wenigstens einer Blockadestellung der Greifeinrichtung (12) bzw. einer in einer Greifeinrichtung (12) aufgenommenen Bügelflasche (10) vorgesehen ist und dass die Steuerungseinrichtung (16) einen Umschaltmechanismus (22) aufweist, wobei diese den Umschaltmechanismus (22) aufweisende Steuerungseinrichtung (16) und diese Detektionseinrichtung (18) derart zusammenwirken, dass bei einer Blockade einer Greifeinrichtung (12) bzw. einer in der Greifeinrichtung (12) aufgenommenen Bügelflasche (10) während einer Bewegung zum Herausheben der Bügelflasche (10) aus einem Flaschenkasten die Greifeinrichtung (12) oder ein Bauteil der Greifeinrichtung (12) verschwenkt wird, um ein Lösen der blockierten Greifeinrichtung (12) bzw. einer in der Greifeinrichtung (12) aufgenommenen Bügelflasche (10) zu bewirken, **dadurch gekennzeichnet, dass** die Greifeinrichtung (12) oder das Bauteil der Greifeinrichtung zusätzlich zum Verschwenken abgesenkt wird.

2. Hubvorrichtung nach Anspruch 1, **dadurch gekennzeichnet, dass** die Greifeinrichtung (12) einen Greifer bzw. einen Greifkopf oder eine Greifertulpe (34) aufweist, oder von einem solchen bzw. einer solchen gebildet wird.

3. Hubvorrichtung nach einem der vorangehenden Ansprüche, **dadurch gekennzeichnet, dass** für das Absenken und/oder Schwenken der Greifeinrichtung (12) oder eines Bauteiles der Greifeinrichtung (12) bei einer Blockade dieser Greifeinrichtung (12) bzw. einer in der Greifeinrichtung (12) aufgenommenen Bügelflasche (10) während einer Bewegung zum Herausheben der Bügelflasche (10) aus einem Flaschenkasten eine Kolben-Zylinder-Baugruppe (26) mit einem Zylinder (30) und einem darin angeordneten Kolben (28) vorgesehen ist.

4. Hubvorrichtung nach einem der Ansprüche 2 und 3, **dadurch gekennzeichnet, dass** ein Bauteil der Kolben-Zylinder-Baugruppe (26), nämlich Kolben (28) oder Zylinder (30), mit einem Greifer bzw. mit einem Greifkopf oder einer Greifertulpe (34) derart gekoppelt ist, dass dieser Greifer bzw. dieser Greifkopf oder diese Greifertulpe (34) mittels der Kolben-Zylinder-Baugruppe (26), insbesondere hydraulisch oder pneumatisch, verstellbar ist, und zwar insbesondere in Axialrichtung der Kolben-Zylinder-Baugruppe (26) verstellbar ist und / oder in der sich um diese Axialrichtung erstreckenden Umfangsrichtung verstellbar ist.

5. Hubvorrichtung nach einem der vorangehenden Ansprüche, **dadurch gekennzeichnet, dass** die Steuerungseinrichtung (16) wenigstens ein erstes Steuerungsmodul zum Erzeugen von translatorischen, insbesondere rein translatorischen oder rein linearen, Bewegungen einer oder mehrerer Greifeinrichtungen (12) zum Herausheben und ggf. Einsetzen von Bügelflaschen (10) aus bzw. in Flaschenkästen aufweist, sowie wenigstens ein zweites Steuerungsmodul zum Erzeugen von kombinierten translatorischen und rotatorischen Bewegungen einer oder mehrerer Greifeinrichtungen (12) oder wenigstens eines Bauteils einer oder mehrerer Greifeinrichtungen (12) für das Lösen einer Blockadestellung wenigstens einer Greifeinrichtung (12) bzw. einer in der jeweils betreffenden Greifeinrichtung (12) aufgenommenen Bügelflasche (10).

6. Hubvorrichtung nach einem der Ansprüche 3 bis 5, **dadurch gekennzeichnet, dass** zum Betätigen der Kolben-Zylinder-Baugruppe (26) ein pneumatisches oder hydraulisches System vorgesehen ist, wobei dieses System insbesondere Bestandteil der Steuerungseinrichtung (16) und/oder des zweiten Steuerungsmoduls ist.

7. Hubvorrichtung nach Anspruch 6, **dadurch gekennzeichnet, dass** das pneumatische oder hydraulische System wenigstens ein a/b-Wegeventil aufweist, wobei a und b jeweils eine natürliche Zahl ist, und wobei insbesondere vorgesehen ist, dass a gleich 3 und b gleich 2 ist.

8. Hubvorrichtung nach einem der vorangehenden Ansprüche, **dadurch gekennzeichnet, dass** die Detektionseinrichtung (18) einen Sensor bzw. Näherungsschalter (20) aufweist, wobei insbesondere vorgesehen ist, dass dieser Sensor bzw. Näherungsschalter (20) für das Detektieren von axialen Relativbewegungen zwischen dem Zylinder (30) und dem Kolben (28) der Kolben-Zylinder-Baugruppe (26) vorgesehen ist.

9. Hubvorrichtung nach einem der Ansprüche 3 bis 8, **dadurch gekennzeichnet, dass** für die bzw. jede Kolben-Zylinder-Baugruppe (26) eine Zwangsführungseinrichtung (32), insbesondere Kulisse, vorgesehen ist, mittels welcher bei einer axialen Relativbewegung zwischen dem Zylinder (30)) und dem darin angeordneten Kolben (28 eine Translations- und eine Rotationsbewegung, insbesondere überlagerte Translations- und eine Rotationsbewegung, wie schraubenförmige Bewegung, des Greifers bzw. des Greifkopfes bzw. der Greifertulpe (34) der Greifeinrichtung (12) bewirkt wird, dem die betreffende Kolben-Zylinder-Baugruppe (26) zugeordnet ist.

10. Verfahren zum Herausheben von Bügelflaschen (10) aus Flaschenkisten mit den Schritten:
- Aktivieren einer Hubeinrichtung derart, dass eine oder eine Vielzahl von Greifeinrichtungen (12) auf eine oder eine Anordnung von in einer Flaschenkasten positionierten Bügelflaschen (10) zubewegt wird, wobei eine jeweilige Greifeinrichtung (12) für einen vorbestimmten Hubvorgang einer vorbestimmten Bügelflasche (10) zugeordnet ist;
- Greifen einer oder mehrerer Bügelflaschen (10) mit jeweils einer separaten Greifeinrichtung (12) im Bereich des Flaschenhalses (14);
- Aktivieren einer Hubeinrichtung (1) derart, dass die mittels der wenigstens einen Greifeinrichtung (12) gegriffenen Bügelflaschen (10) jeweils in Richtung einer aus dem Flaschenkasten angehobenen Stellung belastet werden, um diese Bügelflaschen (10) aus dem bzw. dem jeweiligen Flaschenkasten herauszuheben, wobei bei diesem Belasten überwacht wird, ob der dieser Belastung entsprechenden bzw. folgenden Bewegung der einen bzw. einer oder mehreren der Bügelflaschen (10) blockiert wird, und zwar insbesondere durch Eingriff eines offenen Bügelverschlusses in eine Aussparung oder einen Durchbruch des Flaschenkastens;
- Absenken des bzw. eines jeweiligen Greifers einer Greifeinrichtung (12), der eine Bügelflasche (10) greift, bezüglich welcher eine Blockade festgestellt wurde, falls eine solche Blockade festgestellt wurde, und Verschwenken dieses Greifers mit der darin aufgenommenen Bügelflasche (10) um die Flaschenlängsachse zum Lösen der Blockade, wobei das Absenken und Verschenken insbesondere überlagert ist; und
- Anheben des verschwenkten Greifers mit der Bügelflasche.

## Claims

1. Lifting apparatus for removing swing top bottles (10) from crates, which lifting apparatus (1) has one or more gripper devices (12) for gripping a swing top bottle (10), the lifting apparatus (1) also having a control device (16) to activate the at least one gripper device (12), by means of which control device (16) the axial position along a predetermined axis of the at least one gripper device (12), or of a component of this gripper device (12), is modifiable, and by means of which control device (16) the orientation in the circumferential direction [about] the said axis of the said gripper device (12), or of a component of this gripper device (12), is modifiable, and a detection device (18) being provided to detect at least a jamming position of the gripper device (12), or of a swing top bottle (10) held in a gripper device (12), and that [sic] the control device (16) has a switching mechanism (22), the said control device (16) with its switching mechanism (22) and the said detection device (18) interacting in such a way that in the event of jamming of a gripper device (12), or of a swing top bottle (10) held in the gripper device (12), during a movement to remove the swing top bottle (10) from a crate, the gripper device (12), or a component of the gripper device (12), is turned in order to free the jammed gripper device (12), or swing top bottle (10) held in the gripper device (12), **characterized in that** the gripper device (12), or the component of the gripper device, is lowered as well as turned.

2. Lifting apparatus according to Claim 1, **characterized in that** the gripper device (12) comprises, or is formed by, a gripper or a gripper head or bell (34).

3. Lifting apparatus according to either of the preceding claims, **characterized in that** a piston/cylinder assembly (26) with a cylinder (30) and a piston (28) arranged therein is provided for the lowering and/or turning of the gripper device (12), or of a component of the gripper device (12), in the event of jamming of the said gripper device (12), or of a swing top bottle (10) held in the gripper device (12), during a movement to remove the swing top bottle (10) from a crate.

4. Lifting apparatus according to either of Claims 2 and 3, **characterized in that** a component of the piston/cylinder assembly (26), namely the piston (28) or cylinder (30), is coupled to a gripper or to a gripper head or bell (34) in such a way that the said gripper, or the said gripper head or bell (34), is movable, in particular hydraulically or pneumatically, by means of the piston/cylinder assembly (26), in particular in the axial direction of the piston/cylinder assembly (26), and/or is movable in the circumferential direction extending about the said axial direction.

5. Lifting apparatus according to any one of the preceding claims, **characterized in that** the control device (16) has at least one first control module to generate translational, and in particular purely translational or purely linear, motions of one or more gripper devices (12) to remove swing top bottles (10) from, and if required insert them into, crates, and also at least one second control module to generate combined translational and rotary motions of one or more gripper devices (12), or at least of a component of one or more gripper devices (12), for freeing a jammed position of at least one gripper device (12), or of a swing top bottle (10) held in the affected gripper device (12).

6. Lifting apparatus according to any one of Claims 3 to 5, **characterized in that** a pneumatic or hydraulic system is provided to operate the piston/cylinder assembly (26), this system in particular forming part of the control device (16) and/or second control module.

7. Lifting apparatus according to Claim 6, **characterized in that** the pneumatic or hydraulic system has at least one a/b-way valve, where a and b are natural numbers, and in particular a is made equal to 3, and b, equal to 2.

8. Lifting apparatus according to any one of the preceding claims, **characterized in that** the detection device (18) has a sensor or proximity switch (20), it being provided in particular that this sensor or proximity switch (20) is provided for detecting axial relative movements between the cylinder (30) and the piston (28) of the piston/cylinder assembly (26).

9. Lifting apparatus according to any one of Claims 3 to 8, **characterized in that** a constrained guidance device (32), in particular a slide, is provided for the or each piston/cylinder assembly (26), by means of which when axial relative movement occurs between the cylinder (30) and the piston (28) arranged therein a translational and rotary motion, and in particular a combined translational and rotary motion such as a helical motion, is imparted to the gripper, or to the gripper head or bell (34), of the gripper device (12) assigned to the piston/cylinder assembly (26) concerned.

10. Method for removing swing top bottles (10) from crates, with the following steps:
activating a lifting device to approach a gripper device (12) or a plurality of gripper devices (12) to a swing top bottle (10) or an arrangement of swing top bottles (10) positioned in a crate, each gripper device (12) being assigned to perform a predetermined lifting operation on a predetermined swing top bottle (10);
gripping one or more swing top bottles (10), each with a separate gripper device (12), in the region of the bottle neck (14);
activating a lifting device (1) so as to apply a load in the lifted-out direction to each swing top bottle (10) gripped by means of the at least one gripper device (12) in order to remove these swing top bottles (10) from the crate, this loading being monitored to determine whether the movement of the one or more swing top bottles (10) in response to the said loading is being blocked, in particular due to catching of an open swing top in a recess or opening in the crate;
if such jamming has been detected, lowering the respective gripper of a gripper device (12) gripping a swing top bottle (10) in respect of which jamming has been detected, and turning this gripper together with the swing top bottle (10) held therein about the bottle's longitudinal axis to free the jam, in particular with the lowering and the turning combined; and
lifting the turned gripper together with the swing top bottle.

## Revendications

1. Dispositif de levage pour extraire des bouteilles à bouchon mécanique (10) d'un casier à bouteilles,
le dispositif de levage (1) comporte une ou plusieurs installations de préhension (12) pour prendre une bouteille à bouchon mécanique (10),
le dispositif de levage (1) comporte en outre une installation de commande (16) pour au moins une installation de préhension (12), et cette installation de commande (16), permet de modifier la position axiale d'au moins une installation de préhension ou d'une pièce de cette installation de préhension (12), cette position étant prévue le long d'un axe prédéfini, et cette installation de commande (16), permet de modifier aussi la position de pivotement de l'installation de préhension (12) ou d'une pièce de cette installation de préhension (12), cette position de pivotement étant vue dans la direction périphérique de cet axe, et une installation de détection (18) détecte au moins une position de blocage de l'installation de préhension (12) ou d'une bouteille à bouchon mécanique (10) prise dans une installation de préhension (12), et
l'installation de commande (16) comporte un mécanisme de commutation (22),
l'installation de commande (16) comporte le mécanisme de commutation et l'installation de détection (18) coopère de façon qu'en cas de blocage d'une installation de préhension (12) ou d'une bouteille à bouchon mécanique (10) prise dans l'installation de préhension (12), au cours d'un mouvement d'extraction hors du casier à bouteilles, on puisse basculer l'installation de préhension (12) ou une pièce de l'installation de préhension (12) pour libérer l'installation de préhension (12) bloquée ou une bouteille à bouchon mécanique (10) prise dans l'installation de préhension (12),
**caractérisé en ce qu'**
en plus de leur basculement l'installation de préhension (12) ou la pièce de l'installation de préhension sont aussi abaissées.

2. Dispositif de levage selon la revendication 1,
**caractérisé en ce que**
l'installation de préhension (12) comporte un organe de préhension ou une tête de préhension ou une tulipe de préhension (34) ou bien est constituée par un tel élément ou de tels éléments.

3. Dispositif de levage selon les revendications précédentes,
**caractérisé en ce qu'**
un ensemble piston-cylindre (26) avec un cylindre (30) logeant un piston (28) abaisse et/ou bascule l'installation de préhension (12) ou une pièce de l'installation de préhension (12) en cas de blocage de l'installation de préhension (12) ou d'une bouteille à bouchon mécanique (10) se trouvant dans l'installation de préhension (12), au cours d'un mouvement d'extraction de la bouteille à bouchon mécanique (10) hors du casier à bouteilles.

4. Dispositif de levage selon les revendications 2 et 3,
**caractérisé en ce qu'**
un composant de l'ensemble piston-cylindre (26), à savoir le piston (28) ou le cylindre (30) est couplé à un organe de préhension ou à une tête de préhension ou à une tulipe de préhension (34) de façon que ceux-ci puissent être déplacés par l'ensemble piston-cylindre (26) notamment de manière hydraulique ou pneumatique et cela en particulier dans la direction axiale de l'ensemble piston-cylindre (26) et/ou dans une direction périphérique autour de cette direction axiale.

5. Dispositif de levage selon les revendications précédentes,
**caractérisé en ce que**
l'installation de commande (16) comporte au moins un premier module pour générer des mouvements de translation, notamment de purs mouvements de translation ou de purs mouvements linéaires d'une ou plusieurs installations de préhension (12) pour extraire et le cas échéant introduire des bouteilles à bouchon mécanique (10) dans les casiers à bouteilles et elle comporte au moins un second module de commande pour générer des mouvements combinés de translation et de rotation d'une ou plusieurs installations de préhension (12) ou d'au moins un composant d'une ou plusieurs installations de préhension (12) pour libérer une position bloquée d'au moins une installation de préhension (12) ou d'une bouteille à bouchon mécanique (10) reçue dans une installation de préhension (12).

6. Dispositif de levage selon les revendications 3 à 5,
**caractérisé par**
un système pneumatique ou hydraulique pour actionner l'ensemble piston-cylindre (26) et ce système fait notamment partie de l'installation de commande (16) et/ou du second module de commande.

7. Dispositif de levage selon la revendication 6,
**caractérisé en ce que**
le système pneumatique ou hydraulique comporte au moins un distributeur à tiroir a/b, (a) et (b) étant chacun un nombre naturel entier et en particulier (a) est égal à 3 et (b) est égal à 2.

8. Dispositif de levage selon les revendications précédentes,
**caractérisé en ce que**
l'installation de détection (18) comporte un capteur ou un commutateur de proximité (20) et notamment ce capteur ou ce commutateur de proximité (20) détecte les mouvements axiaux relatifs entre le cylindre (30) et le piston (28) de l'ensemble piston-cylindre (26).

9. Dispositif de levage selon les revendications 3 à 8,
**caractérisé en ce que**
pour l'ensemble piston-cylindre ou chaque ensemble piston-cylindre (26), une installation de guidage forcé (32), notamment une coulisse à l'aide de laquelle en cas de mouvement axial relatif entre le cylindre (30) et son piston (28), produit un mouvement de translation et un mouvement de rotation, ces mouvements étant notamment combinés pour produire un mouvement hélicoïdal de l'organe de préhension ou de la tête de préhension ou de la tulipe de préhension (34) de l'installation de préhension (12) associée à l'ensemble piston-cylindre (26) concerné.

10. Procédé d'extraction de bouteilles à bouchon mécanique (10) d'un casier à bouteilles comprenant les étapes suivantes :
- activation d'une installation de levage de façon qu'une ou plusieurs installations de préhension (12) soient déplacées vers des bouteilles à bouchon mécanique (10) contenues dans un casier à bouteilles, chaque installation de préhension (12) étant associée à une opération de soulèvement prédéfinie d'une bouteille à bouchon mécanique (10) prédéfinie,
- préhension d'une ou plusieurs bouteilles à bouchon mécanique (10) par chaque fois une installation de préhension séparée (12) dans la zone du col de bouteille (14),
- activation d'une installation de levage (1) de façon que les bouteilles à bouchon mécanique (10) prises par au moins une installation de préhension (12) soient sollicitées chaque fois en direction d'une position soulevée hors du casier à bouteilles pour extraire cette bouteille à bouchon mécanique (10) du casier à bouteilles ou de chaque casier à bouteilles, et cette sollicitation est surveillée pour déterminer si les mouvements qui lui correspondent ou qui la suivent de l'une ou de plusieurs bouteilles à bouchon mécanique (10) sont bloqués et cela notamment par la saisie d'un bouchon mécanique, ouvert dans une cavité ou lors d'une rupture du casier à bouteilles,
- abaissement du ou d'un organe de préhension d'une installation de préhension (12) qui prend une bouteille à bouchon mécanique (10) et constate un blocage, puis dans ce cas, pivotement de cet organe de préhension avec la bouteille à bouchon mécanique (10) reçue par l'organe de préhension autour de l'axe longitudinal de la bouteille pour libérer le blocage, l'abaissement et le basculement étant notamment combinés,
- soulèvement de l'organe de préhension basculé avec la bouteille à bouchon mécanique.
